# EUROPEAN PATENT SPECIFICATION

(11) **EP 0 540 999 B1**
(45) Date of publication and mention of the grant of the patent: **23.08.1995**
(21) Application number: 92118450.3
(22) Date of filing: 28.10.1992
(51) Int. Cl.: A47J 31/02, B65D 81/00

(54) **Drip coffee bag**
Beutel zum Zubereiten von gefiltertem Kaffee
Sachet pour faire du café filtre

(30) Priority: 30.10.1991 JP 314095/91
(43) Date of publication of application: 12.05.1993
(73) Proprietor: YAMANAKA SANGYO CO. LTD., Ukyo-ku, Kyoto-City (JP)
(72) Inventor: Suzuki, Kaichi, Kyoto-City, Kyoto-Prefecture (JP)
(74) Representative: Müller-Boré & Partner Patentanwälte

(56) References cited:
- EP-A- 0 463 181
- GB-A- 549 630
- PATENT ABSTRACTS OF JAPAN vol. 15, no. 489 (M-1189) & JP-A-32 12 376 (YAMANAKA SANGYO KK) 17 Sept. 1991

## Description

### BACKGROUND OF THE INVENTION

### Field of the invention

The present invention relates to a coffee bag for drip type coffee.

### Description of the prior art

Drip system has been widely used for extracting coffee and, in the past, most of those, who were particular about the taste of coffee, used flannel filter drip system. In recent years, however, the flannel filter system is not so common because it is troublesome to keep the filter hygienic. The system is now used only on a small scale in coffee shops and the like and by some coffee lovers. Instead, paper filter drip system is mostly used nowadays. In this system, thick filter papers are required to prevent fine particles and fat and oil from oozing out, which cause filtration time to be prolonged and the liquid filtered to tend to remain on the filter surface.

Japanese Utility Model Application Laid-open No. 123480/1980 discloses a paper filter fitted with a pair of ears that is mountable on a cup or the like during extraction. The present applicant also proposed, in Japanese Patent Application Laid-open Nos. 210214/1991 and 218711/1991, a paper filter coffee bag according to the preamble of claim 1 fitted on its side surface with an ear provided with a notch so that the filter can be hung on the brim of a cup during extraction for a long time. This filter however tends, when used with its top end opened, to be unstable. The EP-A-46 31 81 (published January 2, 1992) discloses a similar extracting bag, but has to be considered only for novelty according to Art 54(3) EPC.

Where conventional coffee bags are used by drip system with their upper part opened and hot water is poured there-into, the opened part tends to become loose and difficult to handle.

When compared with flannel filter drip system, however, these simple paper filters often produce, although depending on the filtration characteristics of the filter material used, abnormally strong bitterness due to fine powder having passed therethrough or deteriorated flavor or body due to floating of fats and oils on the liquid surface.

### SUMMARY OF THE INVENTION

Accordingly, an object of the present invention is to provide a drip coffee bag with good extractability, having its top end openable into a neat opening without loosened portions and provided with ears that can hold itself stably on a coffee cup of any type.

Another object of the present invention is to provide a raw material sheet for the above drip coffee bag.

In making coffee by drip system using a coffee bag, the present inventors noticed that, when the top of the bag is opened and hot water is poured therethrough, the coffee bag is very troublesome to handle if the opened edge is loose. The inventors then found that provision of a specifically designed perforated zone including at least two parallel lines of perforations having holes arranged alternately can prevent the loosening of the opened edge. The inventors further figured out a shape of ears that can hold the bag on a cup of any shape and also selected for the bag a material that assures good extractability, and completed the invention.

Thus, the present invention provides a drip coffee bag containing coffee particles, the bag being sealed and being made of either a nonwoven fabric comprising a microfine fiber having a fineness of not more than about 0.2 denier or a laminated sheet comprising said nonwoven fabric;
said bag being provided on the upper part and parallel to the top end thereof with a perforated zone for opening, said perforated zone comprising:
at least two parallel lines of perforations having elongated, linearly disposed holes perforations arranged alternately relative to those in the adjacent perforation line, or
a multiplicity of parallel arranged lines of perforations, said lines of perforations being disposed at an angle with respect to the top end and each comprising a plurality of elongated perforations arranged alternately relative to those in the adjacent perforation line, or
at least one zigzag-shaped line of perforations having elongated perforations;
and said bag being fitted, on symmetrical places below said perforated zone, with at least two ear-fixing bodies and having ears integrally with said ear-fixing bodies;
said ears each having a notch opening downwardly, said notch being shaped such that the bottom opening has a small width and the upper, inner part has a large width as compared with the bottom opening.

The present invention also provides a raw material sheet to be cut and fabricated into coffee bags, said sheet being made of either a nonwoven fabric comprising a microfine fiber having a fineness of not more than about 0.2 denier or a laminated sheet comprising said nonwoven fabric;
said sheet being provided, on its surface and along both side edges thereof, with a pair of perforated zones running parallel to the side edges, said perforated zones each comprising:
at least two parallel lines of perforations having elongated, linearly disposed holes perforations arranged alternately relative to those in the adjacent perforation line, or
a multiplicity of parallel arranged lines of perforations, said lines of perforations being disposed at an angle with respect to the side edge of said sheet and each comprising a plurality of elongated perforations arranged alternately relative to those in the adjacent perforation line, or
at least one zigzag-shaped line of perforations having elongated holes perforations;
and said sheet being fitted, inside said perforated zones and parallel to both side edges thereof, with a multiplicity of pairs of ear-fixing bodies at designated intervals and having ears integrally with said ear-fixing bodies;
said ears each having a notch which opens, when viewed after a bag is fabricated and held upright, downwardly, said notch being shaped such that the bottom opening has a small width and the inner, upper part has a large width as compared with the bottom opening.

### BRIEF DESCRIPTION OF THE DRAWINGS

A more complete appreciation of the invention and many of the attendant advantages thereof will be readily obtained as the same become better understood by reference to the following detailed description when considered in connection with the accompanying drawings, wherein:
FIGURE 1 is a schematic planar view of an embodiment of the drip coffee bag according to the present invention;
FIGURE 2 (a) is an enlarged planar view of the perforations of the bag of FIGURE 1;
FIGURES 2 (b), (c) and (d) are enlarged planar views of other embodiments of arrangement of perforations according to the present invention;
FIGURE 3 is a perspective view of an embodiment of the drip coffee bag during use;
FIGURE 4 is a planar view of an embodiment of the sheet for producing the bag of the present invention and
FIGURE 5 is an enlarged view of one of the ears shown in FIGURE 4.

### DETAILED DESCRIPTION OF THE PREFERRED EMBODIMENTS

The term "line of perforations" or "perforation line" on a sheet herein means a multiplicity of linearly arranged discontinuous cuts or small elongated holes or perforations provided on the sheet and includes such lines in which flat portions between longitudinally adjacent cuts have a smaller thickness than the ordinary thickness of the sheet. The phrase "arranged alternately relative to those (i.e. perforations or holes) in the adjacent line of perforations" defines accordingly the arrangement of two groups of elongated holes or perforations included in two parallel lines adjacent to each other. The perforation zone and the relative arrangement of their holes or perforations specified in the present invention assures good openability with no loosened edge.

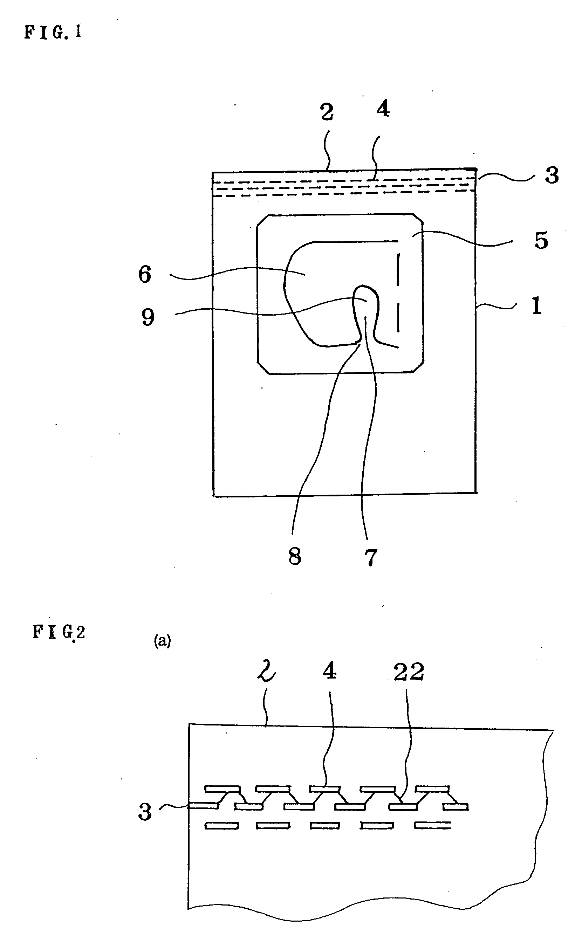

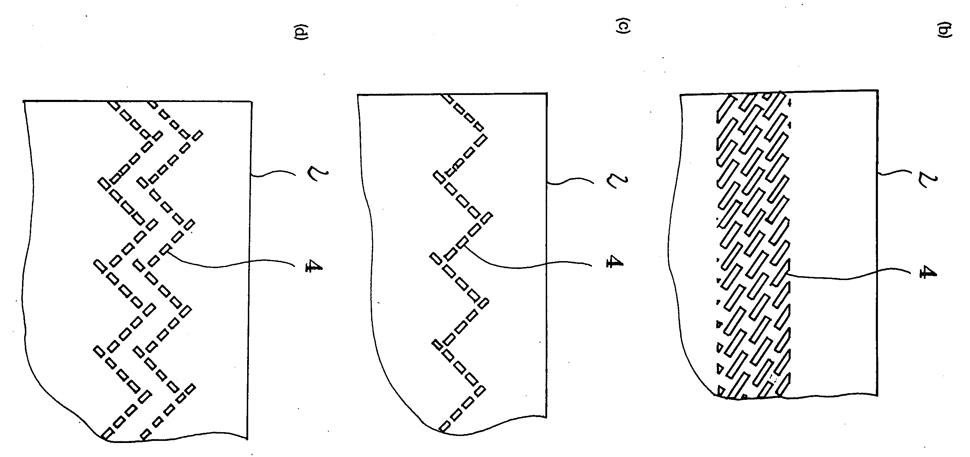

FIGURES 2 (a), (b), (c) and (d) show several embodiments of arrangement of lines of perforations and the mutual location of their perforations provided on the upper part of the coffee bag of the present invention. The perforations in (b), (c) and (d) are positioned at fairly short intervals to become readily openable. The zigzag-shaped edge forming upon opening of (c) or (d) has very small folds so that the edge presents a nearly straight, smooth line and can be handled with ease.

It is necessary that the coffee bag of the present invention comprise a nonwoven fabric comprising a microfine fiber having a fineness of not more than about 0.2 denier or a laminated sheet comprising such a nonwoven fabric. The microfine fiber preferably has a fineness of not more than 0.1 denier, more preferably 0.01 to 0.005 denier. The microfine fiber may have any length with no specific limitation, but the fiber preferably has a length of 30 to 300 mm in view of processability. The nonwoven fabric further preferably has a thickness and a weight of 0.06 to 0.2 mm and 8 to 30 g/m², respectively, more preferably 0.05 to 0.12 mm and 10 to 20 g/m², respectively. The nonwoven fabric preferably has a construction in which 180 to 300 thousand pieces of short fibers accumulate and are entangled per 6 cm-square area.

The coffee bag may comprise only the above nonwoven fabric comprising a microfine fiber or a composite material comprising the nonwoven fabric and, laminated therewith, other woven, knit or nonwoven fabric, paper or like sheets. The filtration performance, the material and structure of a coffee bag influence the taste of coffee to a large extent and in a delicate manner. The most important feature required for a coffee filter to produce a coffee having excellent flavor and body is capability to keep fine coffee particles from coming out and to remove by absorption fats and oils contained in the coffee powder so that such fats and oils do not float on the surface of the coffee. Contamination of fine particles make the touch of the resulting coffee rough to the tongue and floating of fats or oils on the coffee causes unpleasant glittering.

The nonwoven fabric comprising a microfine fiber having a fineness of not more than about 0.2 denier and used for the fabrication of the bag of the present invention has excellent capability to prevent fine coffee particles from coming out and to absorb fats and oils. The nonwoven fabric having such characteristics can, for example, be produced from a thermoplastic polymer by melt blowing process. Examples of the thermoplastic polymer are polypropylene and polyethylene. Use of a composite nonwoven fabric comprising the nonwoven fabric comprising a microfine fiber and a supporting layer comprising a fiber having an ordinary fineness may further improve the filtration performance and the mechanical properties of the resulting filter.

The drip coffee bag of the present invention has excellent extractability and, upon use, can be readily opened to form neat edge with no loosened part. The bag is hence very easily and simply usable and, being fitted with ears having a specific shape, holdable stably on a coffee cup of any shape. The bag therefore can in a simple manner make coffee having the same excellent flavor and body as those obtained by using a thick paper filter or a flannel filter with special care and taking a lot of time.

Other features of the invention will become apparent in the course of the following descriptions of exemplary embodiments which are given for illustration of the invention and are not intended to be limiting thereof.

### EXAMPLES

### Example 1

FIGURE 1 is a schematic planar view of an embodiment of the drip coffee bag of the present invention. The bag comprises a melt blown nonwoven fabric having a thickness of 0.1 mm and comprising polypropylene fiber having a fineness of 0.05 denier. 1 indicates the shape of the front part of the bag body with a counterpart having the same shape being overlapped on its rear. The bag is, after fabrication, filled with coffee particles and then the top part 2 sealed. On the upper part of the bag, 3 lines of perforations 3 are provided parallel to the top end 2. The distance between adjacent lines of perforations is 1.5 mm, so that the distance between the top and bottom perforation lines is 3 mm. The distance between the top end 2 of the bag and the top perforation line is 4.5 mm. Each of the individual perforations or cuts 4 of the perforation line has a long, stripe-like shape as shown in FIGURE 2 (a). The perforations in a perforation line are positioned alternately relative to those of the adjacent perforation line. This location assures, when the bag is opened by cutting with the fingers before use, that the cut edge assumes a zigzag line as shown by the folded line 22 in FIGURE 2 (a) so that the top edge of the cut opening will become neat with no loosened part. The distance between two adjacent perforation lines is not specifically restricted, but it is preferably 1 to 3 mm for producing a neat cut edge. An opening having loose parts makes it difficult to pour hot water therethrough and causes inconveniences to an unexpected degree upon use.

It is recommended that the distance between the top end of the bag and the top perforation line be not more than 5 mm in consideration of the thickness of human fingers. Then, almost no one causes, when opening the bag with fingers, his nail to engage with the perforation line to loosen the opened edge.

The perforation line generally contains a multiplicity of cuts linearly and discontinuously. In this case portions between adjacent cuts may also be partly cut, i.e. become thinner than the thickness of the sheet, which leads to more ready openability of the bag. This is also included in the perforations to be provided on the bag of the present invention.

FIGURES 2 (b), (c) and (d) show the shapes and arrangements of other embodiments of the perforations used in the present invention, wherein (b) shows a perforated band in which a multiplicity of parallel arranged lines of perforations are disposed at an angle with respect to the top end 2 of the bag to constitute the band; and (c) and (d) show 1 and 2 zigzag perforation lines, respectively. In the latter cases, the opened edge becomes also zigzag-shaped, but presents, macroscopically, a nearly smooth line with no loosened part, because the folds are very small.

The bag is fitted with a pair of ear-fixing bodies 5 and, integrally therewith, a pair of ears 6. Each of the ears is provided with a notch 7 opening downwardly and the notch is shaped such that the bottom opening 8 has a small width and the upper, inner part 9 has a large width as compared with the former. Hanging the notch 7 on the brim of a cup can fix the bag stably on the cup. There are lots of variations in the shape of coffee cups. In general, porcelain cups have thin brims, while earthenware cups have thick ones, both with variations to some extent. Furthermore, the brims of cups extend outwardly at various angles. Ears with a notch, having a wide-interior shape 7 as shown in FIGURE 1, thus producing an elasticity to a certain extent, can fit cup brims of any shape. For an earthenware cup with a thick brim, the ear is fixed thereon with the brim reaching the middle part of the notch 7. For a porcelain cup with a thin brim, the brim reaches the depth of the notch to fix the ear. On both occasions, the ear-fixing body 5 connecting the ear is surrounded and held by the soft material constituting bag 1, whereby the notch of the ear automatically fits the shape of the brim to hold the bag stably.

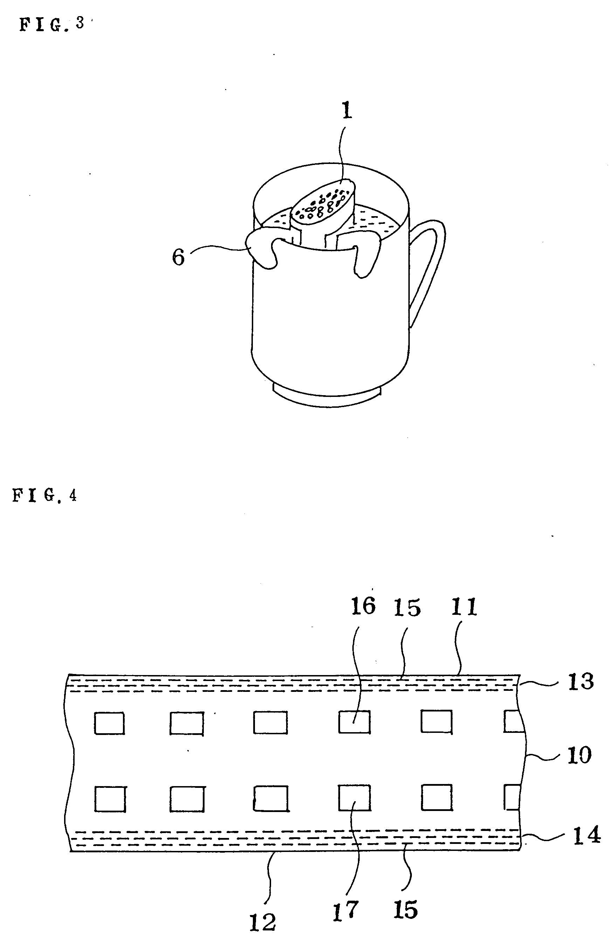

FIGURE 3 is a perspective view of an example of the bag of the present invention during use. The ear mounted on the rear of the bag has a symmetrical shape relative to that on the front. Accordingly, when the top of the bag is opened and its ears are hung on the brim of a coffee cup, the bag is held on the cup as shown in FIGURE 3. This FIGURE clearly shows that the bag can be hung stably on any cup.

### Example 2

FIGURE 4 is a planar view of an embodiment of the raw material sheet for producing the drip coffee bag of the present invention. The sheet comprises a meltblown nonwoven fabric having a thickness of 0.05 mm and comprising a polypropylene fiber having a fineness of 0.05 denier and, laminated therewith, a nonwoven fabric having a thickness of 0.1 mm and comprising a polyester fiber having a fineness of 1.5 deniers. 1 indicates a long continuous sheet to be processed into coffee bags. Along its both side edges 11 and 12, there are provided a pair of perforated zones each comprising three parallel lines of perforations. The distance between two adjacent perforation lines is 1.5 mm, and that between the side edge 11 or 12 and the outermost perforation line 15 is 4.5 mm. Each of the perforations or cuts 4 constituting the perforation lines has a long shape as shown in the FIGURE 2 (a), and the perforations are positioned alternately relative to those of the adjacent perforation line. This arrangement causes, when the bag is opened with fingers at the perforated zone, the cut edge to become as shown by folded line 22 in FIGURE 2 (a) so that the top end becomes neat with no loosened portions. If the opening is loosened, it is difficult to pour hot water therethrough and inconveniences are caused to an unexpected degree upon use.

The meaning of the distance between the side edge 11 or 12 and the outermost perforation line 15 has already been explained in the description for FIGURE 1.

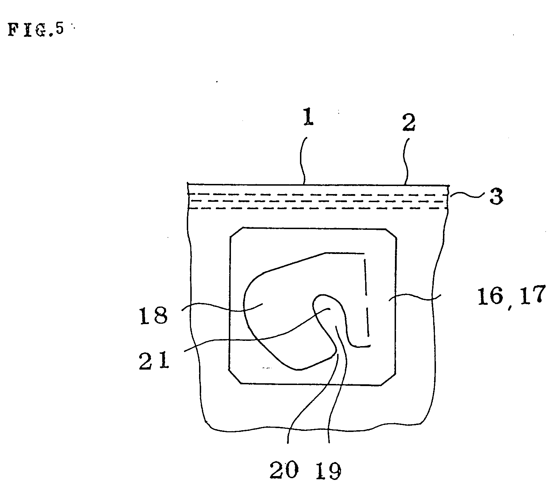

The sheet is also fitted, inside the perforated zones and parallel to both side edges thereof, with a multiplicity of pairs of ear-fixing bodies 16 and 17 at designated intervals. Now reference is made to FIGURE 5, which enlarges an area including the ear-fixing body 16. Each of the ear-fixing bodies 16 holds an ear 18 integrally. The ear 18 has a notch 19 which opens, when viewed after a bag is fabricated and held upright, downwardly. The notch 19 is shaped such that the bottom opening 20 has a small width and the inner, upper part 21 has a larger width as compared with the former.

The shape and function of the ear are the same as explained in the description for FIGURE 1. It has also been described before that hanging the notch on the brim of a coffee cup having any shape can fix the bag stably on the cup. Since most of conventional cups have their brims more or less inclined outwardly, it is recommended to incline the notch a little as shown in FIGURE 5, so that the bag can be fixed on the cups still more stably.

The sheet in FIGURE 4 is folded in half and cut transversely along lines midway between adjacent ears. Then the cut edges are bonded to give coffee bags. Since the perforated zones each have a width of 3 mm, they can sufficiently overlap each other upon folding of the sheet so that, even if a slight shear might occur in the folding, the resulting bag can be opened without producing loose portions upon use.

The bag is then filled with coffee particles and its top end is sealed, to give the drip coffee bag of the present invention. For fabrication of the bags, cutting, bonding and the top sealing may be carried out, for example, by ultrasonic welding.

Obviously, numerous modifications and variations of the present invention are possible in light of the above teachings. It is therefore to be understood that within the scope of the appended claims, the invention may be practiced otherwise than as specifically described herein.

## Claims

1. A drip coffee bag (1) containing coffee particles, the bag being sealed and being made of either a nonwoven fabric comprising a microfine fiber having a fineness of not more than about 0.2 denier or a laminated sheet comprising said nonwoven fabric; the bag being fitted with at least two ear-fixing bodies (5) and having ears (6) integrally with said ear-fixing bodies (5); said ears each having a notch (7) opening downwardly, said notch (7) being shaped such that the bottom opening (8) has a small width and the upper, inner part (9) has a large width as compared with the bottom opening (8) said bag is provided on the upper part and parallel to the top end (2) thereof with a perforated zone for opening, said perforated zone comprising:
at least two parallel lines of perforations (3) having elongated, linearly disposed perforations (4) arranged alternately relative to those in the adjacent perforation line, or
a multiplicity of parallel arranged lines of perforations, said lines of perforations being disposed at an angle with respect to the top end and each comprising a plurality of elongated perforations (4) arranged alternately relative to those in the adjacent perforation line, or
at least one zigzag-shaped line of perforations having elongated perforations (4);
and in that said bag (1) is fitted, on symmetrical places below said perforated zone, with said ear-fixing bodies.

2. A raw material sheet (1; 10) to be cut and fabricated into coffee bags, said sheet being made of either a nonwoven fabric comprising a microfine fiber having a fineness of not more than about 0.2 denier or a laminated sheet comprising said nonwoven fabric;
said sheet being provided, on its surface and along both side edges (11, 12) thereof, with a pair of perforated zones running parallel to the side edges (11, 12), said perforated zones each comprising:
at least two parallel lines of perforations having elongated, linearly disposed perforations (4; 15) arranged alternately relative to those in the adjacent perforation line, or
a multiplicity of parallel arranged lines of perforations, said lines of perforations being disposed at a angle with respect to the side edge (11, 12) of said sheet (1; 10) and each comprising a plurality of elongated perforations (4; 15) arranged alternately relative to those in the adjacent perforation line, or
at least one zigzag-shaped line of perforations having elongated perforations (4; 15);
and said sheet (1; 10) being fitted, inside said perforated zones and parallel to both side edges (11, 12) thereof, with a multiplicity of pairs of ear-fixing bodies (16, 17) at designated intervals and having ears (18) integrally with said ear-fixing bodies (16, 17);
said ears (18) each having a notch (19) which opens, when viewed after a bag is fabricated and held upright, downwardly, said notch (19) being shaped such that the bottom opening (20) has a small width and the inner, upper part (21) has a large width as compared with the bottom opening (20).

## Patentansprüche

1. Tropfkaffeebeutel (1), welcher Kaffeeteilchen enthält, wobei der Beutel abgedichtet ist und aus entweder einem Vliesgewebe mit einer mikrofeinen Faser, welche eine Feinheit von nicht mehr als etwa 0,2 denier aufweist, oder aus einem laminierten Bogen, welcher das Vliesgewebe umfaßt, gebildet ist; wobei der Beute an zumindest zwei Henkelhaltekörpern (5) befestigt ist und einstückig mit den Henkelhaltekörpern (6) Henkel (6) aufweist; wobei die Henkel jeweils einen Schlitz (7) aufweisen, welcher sich nach unten öffnet, und wobei der Schlitz (7) derart geformt ist, daß die untere Öffnung (8) eine kleine Breite aufweist und der obere, innere Teil (9) eine große Breite im Vergleich zu der unteren Öffnung (8) aufweist,
dadurch gekennzeichnet, daß der Beutel an dem oberen Teil und parallel zu dessen oberen Ende (2) mit einer perforierten Zone zum Öffnen versehen ist, wobei die perforierte Zone umfaßt:
zumindest zwei parallele Perforationslinien (3) mit länglichen, linear angeordneten Perforationen (4), welche alternierend bezüglich jenen in der benachbarten Perforationslinie angeordnet sind, oder
eine Vielzahl von parallel angeordneten Perforationslinien, wobei die Perforationslinien unter einem Winkel bezüglich des oberen Endes angeordnet sind und jeweils eine Vielzahl von länglichen Perforationen (4) aufweisen, welche alternierend bezüglich jenen in der benachbarten Perforationslinie angeordnet sind, oder
zumindest eine zick-zack-förmige Perforationslinie mit länglichen Perforationen (4);
und daß der Beutel (1) an symmetrischen Orten unterhalb der perforierten Zone an den Henkelhaltekörpern befestigt ist.

2. Rohmaterialbogen (1; 10), welcher geschnitten und in Kaffeebeutel verarbeitet werden soll, wobei der Bogen aus entweder einem Vliesgewebe mit einer mikrofeinen Faser, welche eine Feinheit von nicht mehr als etwa 0,2 denier aufweist, oder aus einem laminierten Bogen, welcher das Vliesgewebe umfaßt, gebildet ist,
wobei der Bogen an seiner Oberfläche und entlang seiner beiden Seitenkanten (11, 12) mit einem Paar von perforierten Zonen versehen ist, welche parallel zu den Seitenkanten (11, 12) verlaufen, wobei die perforierten Zonen jeweils umfassen:
zumindest zwei parallele Perforationslinien mit länglichen, linear angeordneten Perforationen (4; 15), welche alternierend bezüglich jener in der benachbarten Perforationslinie angeordnet sind, oder
eine Vielzahl von parallel angeordneten Perforationslinien, wobei die Perforationslinien unter einem Winkel bezüglich der Seitenkante (11, 12) des Bogens (1; 10) angeordnet sind und jeweils eine Vielzahl von länglichen Perforationen (4; 15) umfassen, welche alternierend bezüglich jenen in der benachbarten Perforationslinie angeordnet sind, oder
zumindest eine zick-zack-förmige Perforationslinie mit länglichen Perforationen (4; 15);
wobei der Bogen (1; 10) innerhalb der perforierten Zonen und parallel zu seinen beiden Seitenkanten (11, 12) befestigt ist an einer Vielzahl von Paaren von Henkelhaltekörpern (16, 17) bei bestimmten Intervallen und Henkel (18) einstückig mit den Henkelhaltekörpern (16, 17) aufweist;
wobei die Henkel (18) jeweils einen Schlitz (19) aufweisen, welcher sich nach unten öffnet, und zwar gesehen nachdem ein Beute hergestellt und aufrecht gehalten ist, wobei der Schlitz (19) derart geformt ist, daß die untere Öffnung (20) eine kleine Breite aufweist und der innere, obere Teil (21) eine große Breite im Vergleich zu der unteren Öffnung (20) aufweist.

## Revendications

1. Sachet pour faire du café filtre (1), contenant des particules de café, le sachet étant fermé hermétiquement et étant formé soit d'une étoffe non tissée comprenant des fibres microfines ayant une finesse qui ne soit pas supérieure à environ 0,2 denier, soit d'une feuille stratifiée comprenant ladite étoffe non tissée; le sachet étant pourvu de deux corps de fixation à oreille (5) et possédant des oreilles (6) faisant corps avec lesdits corps de fixation à oreille (5); lesdites oreilles ayant chacune une encoche (7) ouverte vers le bas, ladite encoche (7) étant conformée de telle sorte que son ouverture inférieure (8) ait une faible largeur et que sa partie supérieure intérieure (9) ait une grande largeur par comparaison avec l'ouverture inférieure (8);
caractérisé en ce que ledit sachet est pourvu dans sa partie supérieure et parallèlement à son extrémité supérieure (2) d'une zone perforée destinée à l'ouverture, ladite zone perforée comprenant :
au moins deux lignes de perforations parallèles (3) comprenant des perforations allongées disposées linéairement (4) disposées alternativement par rapport à celles de la ligne de perforations adjacente, ou
de multiples lignes de perforations disposées parallèlement, lesdites lignes de perforations étant disposées de façon à faire un angle par rapport à l'extrémité supérieure et comprenant chacune une pluralité de perforations allongées (4) disposées alternativement par rapport à celles de la ligne de perforations adjacente, ou
au moins une ligne de perforations en zigzag comprenant des perforations allongées (4);
et en ce que ledit sachet (1) est pourvu des deux corps de fixation à oreilles en des endroits symétriques situés en-dessous de ladite zone perforée.

2. Feuille de matériau brut (1; 10) destinée à être coupée et transformée en sachets pour faire du café filtre, ladite feuille étant faite soit d'une étoffe non tissée comprenant des fibres microfines ayant une finesse qui ne soit pas supérieure à environ 0,2 denier, soit d'une feuille stratifiée comprenant ladite étoffe non tissée;
ladite feuille étant pourvue sur sa surface et le long de ses deux bords latéraux (11, 12) d'une paire de zones perforées s'étendant parallèlement aux bords latéraux (11, 12), lesdites zones perforées comprenant chacune :
au moins deux lignes de perforations parallèles (3) comprenant des perforations allongées disposées linéairement (4; 15) disposées alternativement par rapport à celles de la ligne de perforations adjacente, ou
de multiples lignes de perforations disposées parallèlement, lesdites lignes de perforations étant disposées de façon à faire un angle par rapport aux bords latéraux (11, 12) de ladite feuille (1; 10) et comprenant chacune une pluralité de perforations allongées (4; 15) disposées alternativement par rapport à celles de la ligne de perforations adjacente, ou
au moins une ligne de perforations en zigzag comprenant des perforations allongées (4; 15);
et ladite feuille (1; 10) étant pourvue, à l'intérieur desdites zones perforées et parallèlement à ses deux bords latéraux (11, 12) d'une multiplicité de paires de corps de fixation à oreille (16, 17) à des intervalles déterminés et possédant des oreilles (18) faisant corps avec lesdits corps de fixation à oreille (16, 17); lesdites oreilles (18) ayant chacune une encoche (19) ouverte vers le bas lorsqu'elle est vue après que le sachet est fabriqué et lorsque celui-ci est maintenu vertical, ladite encoche (19) étant conformée de telle sorte que son ouverture inférieure (20) ait une faible largeur et que sa partie supérieure intérieure (21) ait une grande largeur par comparaison avec l'ouverture inférieure (20).
